# EUROPEAN PATENT SPECIFICATION

(11) **EP 4 365 740 B1**
(45) Date of publication and mention of the grant of the patent: **21.05.2025**
(21) Application number: 23197503.8
(22) Date of filing: 14.09.2023
(51) Int. Cl.: G06F 11/07, G06F 11/30, G06F 21/44

(54) **CHIP MONITORING METHOD AND APPARATUS**
CHIPÜBERWACHUNGSVERFAHREN UND -VORRICHTUNG
PROCÉDÉ ET APPAREIL DE SURVEILLANCE DE PUCE

(30) Priority: 02.11.2022 CN 202211364803
(43) Date of publication of application: 08.05.2024
(73) Proprietor: Horizon Journey (Hangzhou) Artificial Intelligence Technology Co., Ltd., Hangzhou, Zhejiang 310000 (CN)
(72) Inventor: JIN, Lingfang, Hangzhou, 310000 (CN)
(74) Representative: Dehns Germany Partnerschaft mbB

(56) References cited:
- WO-A1-2004/046924
- US-A1- 2014 298 026

## Description

### RELATED APPLICATION INFORMATION

This application claims priority to Chinese patent application Ser. No. 202211364803.6 filed on November 2, 2022.

### FIELD OF THE INVENTION

This disclosure relates to the technical field of chips, and in particular, to a chip monitoring method and apparatus.

### BACKGROUND OF THE INVENTION

With the development of technologies, architectures of chips become increasingly complex. In a current architecture, a chip not only includes a high-performance master core (which is also known as a main processing unit), but also includes a slave core (which is also known as a slave processing unit) with an auxiliary processing function. Further, to improve security of the chip, the master core under this architecture can support a Trustzone technology. The master core supporting the Trustzone technology generally uses dedicated firmware that can switch between a non-security zone and a security zone.

However, when the master core switches from the non-security zone to the security zone and implements a corresponding service, sometimes a fault may occur. Therefore, how to provide a method for monitoring the chip becomes a problem that currently needs to be resolved.

Document US2014298026 discloses a processor unit is configured to switch between secure and non-secure modes, read/write data from/to a memory unit, and write an OS execution image of a secure OS unit to the memory unit. The setting unit is configured to set a shared memory area allowing reading and writing in both modes and an execution module memory area allowing reading and writing in the secure mode but not allowing reading or writing in the non-secure mode with respect to the control unit.

### SUMMARY OF THE INVENTION

To resolve the foregoing technical problem, this disclosure is proposed. Embodiments of this disclosure provide a chip monitoring method and apparatus.

According to an aspect of this disclosure, a chip monitoring method is provided, which is applicable to a chip including a first processing unit and a second processing unit. The method includes:
storing, by the first processing unit, access information into a shared memory of the first processing unit and the second processing unit when accessing a security zone of the first processing unit, wherein the access information includes an access-state identifier and a service-type identifier of the current access, and the access-state identifier is a first identifier indicating that the first processing unit starts the access to the security zone or a second identifier indicating that the first processing unit completes the access to the security zone;
starting timing by the second processing unit when it is determined that the first processing unit accesses the security zone;
reading, by the second processing unit, the access information from the shared memory; and
determining, by the second processing unit, a service type with a fault in the first processing unit based on the service-type identifier in the access information, when the second processing unit determines that duration of the timing and execution duration required for the current access meet a preset size relationship and determines that the access-state identifier in the access information is the first identifier.

According to another aspect of an embodiment of this disclosure, a chip monitoring apparatus is provided, which is applicable to a chip including a first processing unit and a second processing unit. The chip monitoring apparatus includes:
a storage module which is configured to store access information into a shared memory of the first processing unit and the second processing unit when the first processing unit accesses a security zone of the first processing unit, wherein the access information includes an access-state identifier and a service-type identifier of the current access, and the access-state identifier is a first identifier indicating that the first processing unit starts the access to the security zone or a second identifier indicating that the first processing unit completes the access to the security zone;
a timing module which is configured to start timing when it is determined that the first processing unit accesses the security zone;
a reading module which is configured to read the access information stored by the storage module from the shared memory; and
a determining module which is configured to determine a service type that causes a fault to the first processing unit based on the service-type identifier read by the reading module, when it is determined that duration of the timing that is determined by the timing module and execution duration required for the current access meet a preset size relationship and it is determined that the access-state identifier read by the reading module is the first identifier.

According to still another aspect of an embodiment of this disclosure, a computer readable storage medium is provided, wherein the storage medium stores a computer program, and the computer program is used for implementing the chip monitoring method described in any one of the foregoing embodiments of this disclosure.

According to yet another aspect of an embodiment of this disclosure, an electronic device is provided, wherein the electronic device includes:
a processor; and
a memory, configured to store processor-executable instructions,
wherein the processor is configured to read the executable instructions from the memory, and execute the instructions to implement the chip monitoring method described in any one of the foregoing embodiments of this disclosure.

Embodiments of this disclosure provide a chip monitoring method and apparatus. The method is applicable to the chip including the first processing unit and the second processing unit. Moreover, the chip is provided with shared content of the first processing unit and the second processing unit. In this method, the first processing unit stores the access information into the shared memory when accessing the security zone of the first processing unit. The access information includes the access-state identifier that can indicate whether the first processing unit completes the access to the security zone and the service-type identifier of the current access. The second processing unit starts timing when determining that the first processing unit accesses the security zone, and reads the access information from the shared memory. Subsequently, the second processing unit determines, based on the service-type identifier in the access information, the service type with a fault in the first processing unit, when the second processing unit determines that the duration of the timing and the execution duration required for the current access meet the preset size relationship and determines that the access-state identifier in the access information is the first identifier.

According to the solutions provided in the embodiments of this disclosure, a fault type of the first processing unit can be determined when a fault occurs to the first processing unit, thereby resolving a problem that a cause of the fault cannot be determined according to an existing technology, and implementing chip monitoring.

### BRIEF DESCRIPTION OF THE DRAWINGS

FIG 1 is a structure diagram of a chip to which this disclosure is applicable;
FIG 2 is a schematic flowchart of a chip monitoring method according to an exemplary embodiment of this disclosure;
FIG 3 is a schematic flowchart of a chip monitoring method according to another exemplary embodiment of this disclosure;
FIG 4 is a schematic flowchart of a chip monitoring method according to another exemplary embodiment of this disclosure;
FIG 5 is a schematic flowchart of a chip monitoring method according to another exemplary embodiment of this disclosure;
FIG 6 is a schematic diagram of a chip architecture according to an exemplary embodiment of this disclosure;
FIG 7(a) is a schematic diagram of an interaction between a first processing unit and a second processing unit according to an exemplary embodiment of this disclosure;
FIG 7(b) is a schematic diagram of an interaction between a first processing unit and a second processing unit according to another exemplary embodiment of this disclosure;
FIG 8 is a schematic flowchart of a chip monitoring method according to another exemplary embodiment of this disclosure;
FIG 9 is a structure diagram of a chip monitoring apparatus according to an exemplary embodiment of this disclosure;
FIG 10 is a structure diagram of a chip monitoring apparatus according to another exemplary embodiment of this disclosure; and
FIG 11 is a structure diagram of an electronic device according to an exemplary embodiment of this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

It should be noted that unless otherwise specified, the scope of this disclosure is not limited by relative arrangement, numeric expressions, and numerical values of components and steps described in these embodiments.

### Application overview

With the development of technologies, architectures of chips become increasingly complex. In a current architecture, a chip not only includes a high-performance master core, but also includes a slave core with an auxiliary processing function. Further, to improve security of the chip, the master core under this architecture can support a Trustzone technology. In this case, the master core typically includes a security zone (secure) and a non-security zone (non-secure). Moreover, the master core supporting the Trustzone technology generally uses dedicated firmware to switch between the non-security zone and the security zone. When it is required to access the security zone, the master core can invoke a secure monitor call (SMC) instruction. The SMC instruction includes a plurality types of instructions, and can correspondingly implement various types of services, such as key creation, key deletion, encryption and decryption, signature, and signature verification.

However, the master core may have a fault (such as hanging) when executing various services. To prevent the master core from hanging and affecting a function of the chip that subsequently needs to be performed, the chip usually needs to be monitored.

In a current chip monitoring scheme, a debugger is used to debug the master core. During a debugging process, the master core performs operations corresponding to various services again. The debugger determines a problem that occurs in the process in which the master core performs the operations corresponding to the various services, and determines a cause of the hanging of the master core based on the problem that occurs. However, the debugger is required to be configured during a process of implementing this scheme, and the master core is required to perform the operations corresponding to the various services again. As a result, the implementation is complex and time-consuming, and thus this scheme is not widely applied. Currently, a second scheme is commonly used to monitor the chip.

According to the second monitoring scheme for the chip, the master core is monitored by viewing logs recorded in a log system, or by disposing monitoring software of watchdog in the slave core. In this scheme, whether a fault occurs to the master core can be determined through records of the logs or monitoring of the watchdog.

However, generally only whether a fault occurs to the master core is recorded in the logs, and the watchdog can also only monitor whether a fault occurs to the master core. In other words, through a chip monitoring scheme in a relevant technology, merely whether a fault occurs to the master core can be determined while a cause of the fault of the master core cannot be determined.

### Exemplary system

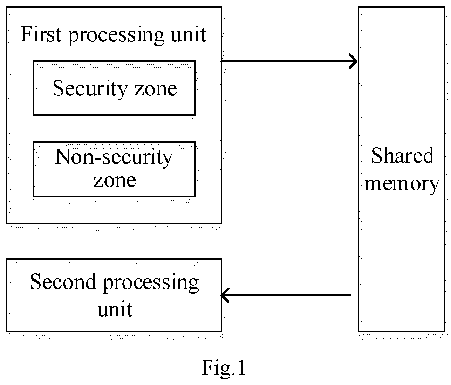

Embodiments of this disclosure can be applicable to an application scenario in which chip monitoring is required. Referring to the schematic structural diagram shown in FIG 1, a chip includes a master core and a slave core. The master core includes a security zone and a non-security zone. The master core can access the security zone by invoking an instruction (such as an SMC instruction).

In addition, the chip further includes shared content of the master core and the slave core, and both the master core and the slave core can access the shared content.

When accessing the security zone, the master core can store access information into a shared memory. The access information can include an access-state identifier and a service-type identifier of the current access. The access-state identifier is used to indicate whether the master core completes the current access to the security zone.

The slave core can read the access information stored in the shared memory by accessing the shared memory, and determine whether a fault occurs to the master core and a type of the fault based on the access information, thereby implementing the chip monitoring.

### Exemplary method

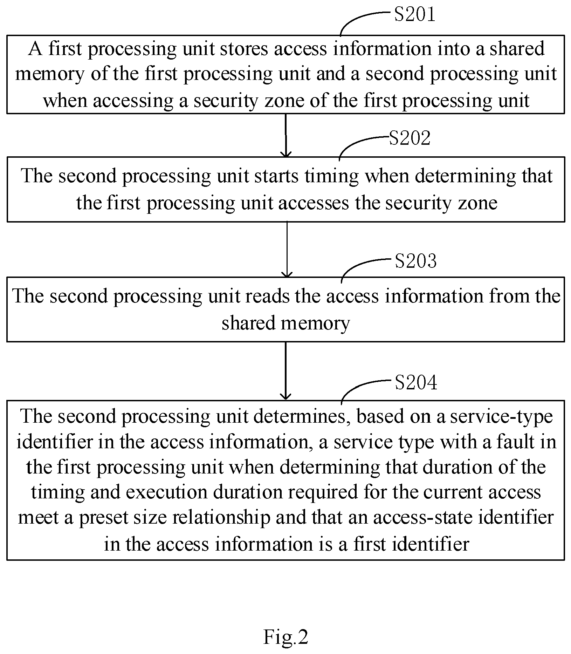

FIG 2 is a schematic flowchart of a chip monitoring method according to an exemplary embodiment of this disclosure. This embodiment can be applicable to a chip. The chip includes a first processing unit and a second processing unit. The first processing unit includes a security zone and a non-security zone.

In a feasible design, the first processing unit is a master core of the chip, and the second processing unit is a slave core of the chip. Certainly, the first processing unit and the second processing unit can also be other modules in the chip. This is not limited in this disclosure.

As shown in FIG 2, the chip monitoring method can include the following steps.

Step 201. A first processing unit stores access information into a shared memory of the first processing unit and a second processing unit when accessing a security zone of the first processing unit.

The access information includes an access-state identifier and a service-type identifier of the current access. The access-state identifier is a first identifier or a second identifier. The first identifier indicates that the first processing unit starts the access to the security zone. The second identifier indicates that the first processing unit completes the access to the security zone.

In this case, whether the first processing unit completes the access to the security zone can be determined through the access-state identifier in the access information.

In an example, the first identifier is represented by 1, and the second identifier is represented by 2. Correspondingly, after the first processing unit starts the access to the security zone, the first identifier 1 is stored into the shared memory. After completing the access to the security zone, the first processing unit modifies the access-state identifier stored in the shared memory as the second identifier 2. In this case, the access-state identifier stored in the shared memory can indicate whether the first processing unit accesses the security zone.

In addition, the access information further includes a service-type identifier. In this disclosure, the first processing unit can implement a plurality of services by accessing the security zone, and corresponding service-type identifiers can be preset for the services, respectively. In this case, a corresponding service type when the first processing unit accesses the security zone for this time can be determined based on the service-type identifier.

Step 202. The second processing unit starts timing when determining that the first processing unit accesses the security zone.

When the first processing unit accesses the security zone, the second processing unit can start a timer for timing. The timer can be disposed within the second processing unit, or can be disposed within the chip and be independent of the second processing unit. This is not limited in this disclosure.

Step 203. The second processing unit reads the access information from the shared memory.

In this disclosure, the shared memory refers to a memory shared by the first processing unit and the second processing unit. In this case, the second processing unit can also access the shared memory and read the access information stored by the first processing unit.

Step 204. The second processing unit determines, based on a service-type identifier in the access information, a service type with a fault in the first processing unit when determining that duration of the timing and execution duration required for the current access meet a preset size relationship and that an access-state identifier in the access information is a first identifier.

In this disclosure, that the duration of the timing and the execution duration required for the current access meet the preset size relationship may be that the duration of the timing is greater than the execution duration required for the current access.

When the access-state identifier in the access information is the first identifier, it is indicated that the first processing unit does not complete the access to the security zone. In this case, if the duration of the timing is greater than the execution duration required for the current access, it is indicated that the access to the security zone is still not completed after duration for the first processing unit to access the security zone exceeds the execution duration required for the current access, which further indicates that a fault occurs to the first processing unit. Therefore, the service type with a fault in the first processing unit can be determined based on the service-type identifier in the access information, thereby implementing chip monitoring.

This embodiment of this disclosure provides a chip monitoring method. The method is applicable to the chip including the first processing unit and the second processing unit. Moreover, the chip is provided with shared content of the first processing unit and the second processing unit. In this method, the first processing unit stores the access information into the shared memory when accessing the security zone of the first processing unit. The access information includes the access-state identifier that can indicate whether the first processing unit completes the access to the security zone and the service-type identifier of the current access. The second processing unit starts timing when determining that the first processing unit accesses the security zone, and reads the access information from the shared memory. Subsequently, the second processing unit determines, based on the service-type identifier in the access information, the service type with a fault in the first processing unit when determining that the duration of the timing and the execution duration required for the current access meet the preset size relationship and that the access-state identifier in the access information is the first identifier.

According to the method provided in this embodiment of this disclosure, a fault type of the first processing unit can be determined when a fault occurs to the first processing unit, thereby resolving a problem that a cause of the fault cannot be determined according to an existing technology.

Further, the solution of this disclosure is to determine the service type with a fault in the first processing unit based on the access information stored in the shared memory, without requiring a debugger for debugging. Therefore, compared with an existing scheme of debugging by using a debugger, there is no need to configure a debugger, and time required for chip monitoring is shorter, which can improve chip monitoring efficiency.

In step 204 of this disclosure, the second processing unit needs to determine whether the duration of the timing and the execution duration required for the current access meet the preset size relationship. The second processing unit can determine the execution duration required for the current access in a plurality of manners.

In a feasible implementation, the execution duration required for the current access is execution duration required for the current access that is included in the access information.

In this implementation, the access information stored in the shared memory by the first processing unit further includes the execution duration required for the current access. In this case, the second processing unit accesses the shared memory to obtain the access information stored in the shared memory, so as to determine the execution duration required for the current access based on the access information.

In a feasible implementation, a corresponding relationship between execution duration respectively corresponding to each type of service implemented by the first processing unit and service information can be predetermined, and the corresponding relationship is stored in a storage module that can be accessed by the first processing unit or the first processing unit. In this case, when the first processing unit accesses the security zone, the execution duration required for the current access can be determined based on the service information executed by the first processing unit and the corresponding relationship, and the execution duration required for the current access is stored in the shared memory, so that the access information stored in the shared memory by the first processing unit further includes the execution duration required for the current access.

In this feasible implementation, the service information in the corresponding relationship can be used to distinguish between different types of services that are implemented by the first processing unit. For example, the service information can include the service-type identifier.

In this implementation, the second processing unit can determine the execution duration required for the current access by reading the access information in the shared memory. Therefore, the execution duration required for the current access can be determined efficiently.

In another feasible implementation, the execution duration required for the current access is execution duration that is determined by the second processing unit based on a preset protocol and the service-type identifier included in the access information. The preset protocol includes a corresponding relationship between at least one service-type identifier and the execution duration.

In an implementation, the preset protocol can be pre-stored in the second processing unit. After reading the service-type identifier stored in the shared memory, the second processing unit can determine the execution duration required for the current access based on the corresponding relationship included in the preset protocol and the service-type identifier.

In this implementation, the first processing unit is not required to store the execution duration required for the current access in the shared memory. Correspondingly, the second processing unit is not required to determine the execution duration required for the current access by means of accessing the shared memory. In this way, amounts of data respectively interacted with the shared memory by the first processing unit and the second processing unit can be reduced.

In the solutions of this disclosure, through step 201, the first processing unit stores the access information into the shared memory. The access information includes the access-state identifier and the service-type identifier of the current access. Further, the access information can further include a core identifier of the first processing unit that is called for the current access, or the access information can further include a core identifier and a thread identifier of the first processing unit that is called for the current access.

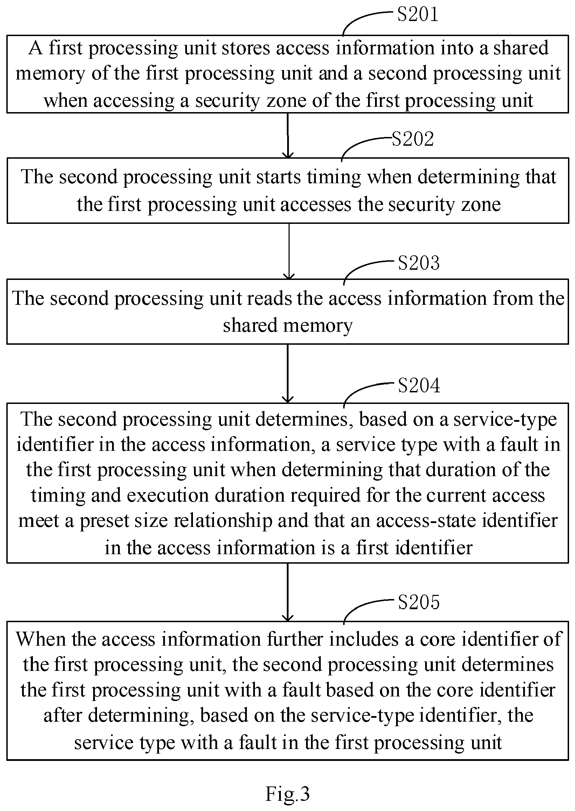

Correspondingly, as shown in FIG 3, on the basis of the embodiment shown in FIG 2, a chip monitoring method according to another embodiment of this disclosure can further include the following step.

Step 205. When the access information further includes a core identifier of the first processing unit, the second processing unit determines the first processing unit with a fault based on the core identifier after determining, based on the service-type identifier, the service type with a fault in the first processing unit.

A plurality of first processing units may be included in a same chip. In this case, corresponding core identifiers can be pre-allocated to various first processing units in the chip, and different first processing units have different core identifiers. Moreover, the access information stored in the shared memory by the first processing unit further includes the core identifier of the first processing unit. In this case, after determining that the duration of the timing and the execution duration required for the current access meet the preset size relationship, the second processing unit can further determine the first processing unit with a fault based on the core identifier stored in the shared memory, thereby further implementing the chip monitoring.

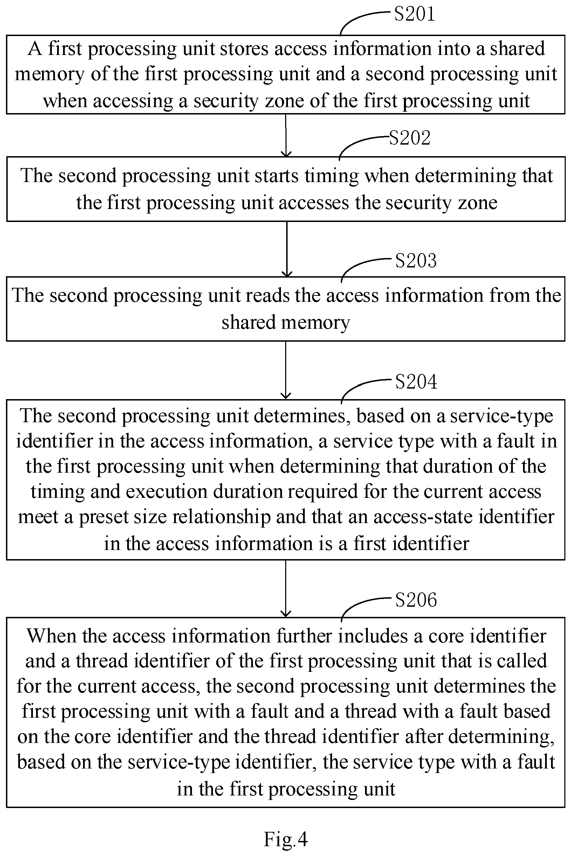

Alternatively, as shown in FIG 4, on the basis of the embodiment shown in FIG 2, a chip monitoring method according to another embodiment of this disclosure can further include the following step.

Step 206. When the access information further includes a core identifier and a thread identifier of the first processing unit that is called for the current access, the second processing unit determines the first processing unit with a fault and a thread with a fault based on the core identifier and the thread identifier after determining, based on the service-type identifier, the service type with a fault in the first processing unit.

The second processing unit can perform corresponding operations by calling the thread. In this embodiment, corresponding thread identifiers can be pre-allocated to various threads, and different thread identifiers have different threads. Moreover, the access information stored in the shared memory by the first processing unit further includes the core identifier and the thread identifier of the first processing unit. In this case, after determining that the duration of the timing and the execution duration required for the current access meet the preset size relationship, the second processing unit can further determine the first processing unit with a fault and the thread with a fault in the first processing unit based on the core identifier and the thread identifier that are stored in the shared memory, thereby implementing the chip monitoring more accurately.

In step 203 of this disclosure, the second processing unit reads the access information from the shared memory. In an actual monitoring process, this step can be implemented in various ways.

In one feasible implementation, that the second processing unit reads the access information from the shared memory includes: periodically reading, by the second processing unit, the access information from the shared memory based on a preset first period.

In this implementation, the second processing unit can include a timer or can be connected to a timer. The timer generates a corresponding trigger signal every first period. The second processing unit reads the access information from the shared memory after obtaining the trigger signal.

Through this implementation, the second processing unit can read the access information in the shared memory by accessing the shared memory periodically, thereby determining whether a fault occurs to the first unit in time.

In another feasible implementation, that the second processing unit reads the access information from the shared memory can include the following steps.

First, the second processing unit determines a target moment at which the second processing unit reads the access information, based on the execution duration required for the current access and a moment at which the access information is stored in the shared memory.

Subsequently, the second processing unit reads the access information from the shared memory at the target moment.

In this implementation, the second processing unit can access the shared memory to determine the moment at which the access information is stored in the shared memory, then determine the target moment based on the execution duration required for the current access and the moment at which the access information is stored in the shared memory, and then access the shared memory at the target moment again to read the access information in the shared memory.

Duration between the target moment and the moment at which the access information is stored into the shared memory can be greater than or equal to the execution duration required for the current access. In other words, if the first processing unit has no fault during a process of implementing a current service, the first processing unit needs to complete the current access at the target moment. In this case, the access-state identifier stored in the shared memory is represented by the second identifier.

In a feasible design, the duration between the target moment and the moment at which the access information is stored into the shared memory is equal to the execution duration required for the current access. For example, if the execution duration required for the current access is a and the moment at which the access information is stored into the shared memory is referred to as a first moment, a difference between the target moment and the first moment is a.

Because the difference between the target moment and the first moment is a, it indicates that duration from the first moment to the target moment is the execution duration required for the current access. In this case, if the first processing unit has no fault during the process of implementing the current service, the first processing unit needs to complete the current access at the target moment.

In another feasible design, the duration between the target moment and the moment at which the access information is stored into the shared memory is greater than the execution duration required for the current access. In this case, if duration b can be preset, the duration between the target moment and the moment at which the access information is stored into the shared memory is equal to a sum of execution duration a required for the current access and the duration b. In other words, if the moment at which the access information is stored into the shared memory is referred to as a first moment, a difference between the target moment and the first moment is the sum of a and b.

In this case, if the difference between the target moment and the first moment is greater than a, it indicates that duration from the first moment to the target moment is greater than the execution duration required for the current access. In this case, if the first processing unit has no fault during the process of implementing the current service, the first processing unit needs to complete the current access at the target moment.

In addition, in this design, to timely monitor whether a fault occurs to the first processing unit, b is usually set to smaller duration. To be specific, the duration between the target moment and the moment at which the access information is stored into the shared memory is close to the execution duration required for the current access, so that the second processing unit can be enabled to determine whether a fault occurs to the first processing unit in time.

If the first processing unit has no fault during the process of implementing the current service, the first processing unit has completed the current access at the target moment. Correspondingly, the access-state identifier stored in the shared memory is represented by the second identifier. If the first processing unit has a fault during the process of implementing the current service, the first processing unit usually does not complete the current access at the target moment. Correspondingly, the access-state identifier stored in the shared memory is represented by the first identifier. Therefore, whether the first processing unit has a fault during the process of implementing the current service can be determined through the access information read from the shared memory by the second processing at the target moment.

In this implementation, the second processing unit is required to read the access information in the shared memory for less times. Therefore, power consumption of the chip can be reduced.

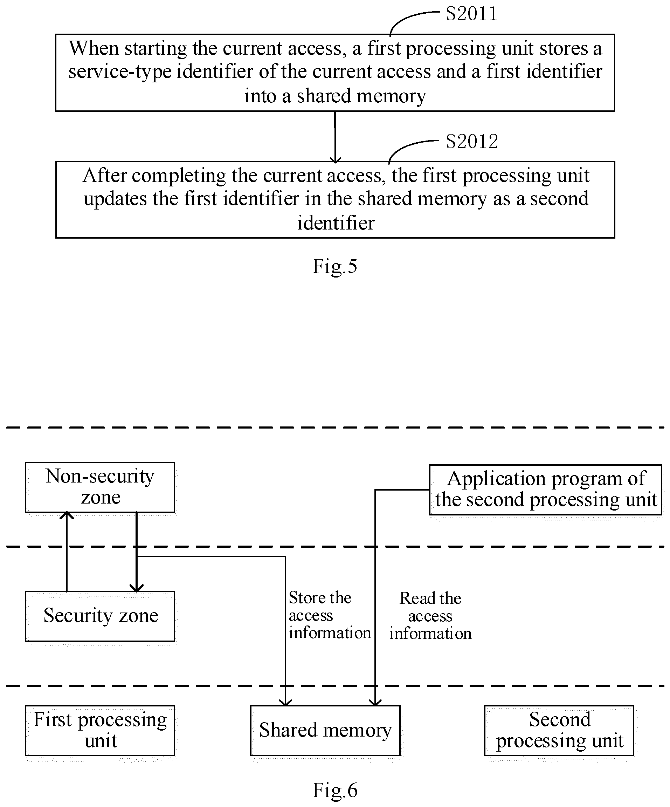

In the foregoing embodiment, the operations for the first processing unit to store the access information into the shared memory of the first processing unit and the second processing unit are disclosed according to step 201. As shown in FIG 5, on the basis of the embodiment shown in FIG 2, step 201 can include the following steps.

Step 2011. When starting the current access, the first processing unit stores the service-type identifier of the current access and the first identifier into the shared memory.

To be specific, the first processing unit stores the service-type identifier of the current access and the first identifier into the shared memory every time starting the current access. In this way, through the first identifier, it is indicated that the first processing unit starts the access to the security zone and the first processing unit does not complete the current access.

Step 2012. After completing the current access, the first processing unit updates the first identifier in the shared memory as the second identifier.

In this case, through the second identifier, it can be indicated that the first processing unit has completed the current access.

Through the operations in steps 2011 and 2012, the first processing unit can store the corresponding access-state identifier into the shared memory based on whether the current access has been completed thereby, so that the second processing unit determines whether the first processing unit has completed the current access through the access-state identifier stored in the shared memory.

In this disclosure, the operation for the second processing unit to start the timing when it determines that the first processing unit accesses the security zone is disclosed according to step 202. The operation can be implemented in various ways.

In one feasible implementation, that the second processing unit starts the timing when determining that the first processing unit accesses the security zone includes:
first, obtaining, by the second processing unit, a trigger instruction that is generated by the first processing unit when accessing the security zone; and
subsequently, in response to the trigger instruction, starting the timing by the second processing unit.

In this implementation, the first processing unit may generate the trigger instruction when accessing the security zone, and may transmit the trigger instruction to the second processing unit. The second processing unit starts the timing after receiving the trigger instruction.

According to this implementation, the second processing unit can start the timing based on the trigger instruction generated by the first processing unit.

Alternatively, in another implementation, the second processing unit can monitor a state of the first processing unit, and start the timing when it is monitored that the first processing unit accesses the security zone.

Alternatively, another processing unit in the chip can monitor a state of the first processing unit, generate the trigger instruction when it is monitored that the first processing unit accesses the security zone, and transmit the trigger instruction to the second processing unit, so that the second processing unit starts the timing.

Certainly, the second processing unit can also start the timing in another manner when determining that the first processing unit accesses the security zone. This is not limited in this disclosure.

According to the chip monitoring method provided in this disclosure, whether the first processing unit has a fault when accessing the security zone of the first processing unit can be determined, and the service type of the fault can be determined when the fault occurs. Service types for accessing the security zone by the first processing unit include, but are not limited to any one of the following:
key creation, key deletion, key importing, key exporting, symmetric encryption and decryption, hash obtaining, asymmetric encryption and decryption, asymmetric signature, and signature verification.

In this case, corresponding service-type identifiers can be preset for the various service types described above, and the corresponding service-type identifier can be stored in the shared memory when the first processing unit implements a corresponding service, so that the second processing unit can determine, based on the service-type identifier stored in the shared memory, the service type for the first processing unit to implement the service.

Certainly, the service type can also be another type. This is not limited in this disclosure.

To clarify the chip monitoring method provided in this disclosure, a schematic diagram of a chip architecture is disclosed according to FIG 6. Referring to FIG 6, a chip includes a first processing unit, a second processing unit, and a shared memory. Both the first processing unit and the second processing unit can access the shared memory.

The first processing unit includes a security zone and a non-security zone. The first processing unit can access the security zone by invoking an instruction. For example, the instruction can be an SMC instruction. During a process of accessing the security zone, referring to FIG 6, the non-security zone of the first processing unit can transmit a service request instruction to the security zone. After the current access is completed, the security zone can transmit a feedback instruction to the non-security zone.

In addition, when accessing the security zone, the first processing unit can store access information into the shared memory according to the solutions provided in the foregoing embodiments of this disclosure. The access information can include an access-state identifier and a service-type identifier of the current access. Moreover, the access information can further include execution duration required for the current access. Further, the access information can further include a core identifier of the first processing unit that is called for the current access, or can include a core identifier and a thread identifier of the first processing unit that is called for the current access.

The second processing unit can read the access information from the shared memory. Specifically, referring to FIG 6, an application program of the second processing unit starts timing when determining that the first processing unit accesses the security zone, reads the access information from the shared memory, and monitors a fault situation of the first processing unit according to the chip monitoring method provided in the foregoing embodiments of this disclosure.

In a feasible example, the first processing unit can store the access information into the shared memory by means of an information list. Corresponding fields can be set in the information list, and corresponding access information is stored respectively through the fields. In this case, if the access information includes the access-state identifier, the service-type identifier of the current access, the execution duration required for the current access, and the core identifier and the thread identifier of the first processing unit that is called for the current access, the fields included in the information list can include: a field (such as a command ID field) used to store the service-type identifier of the current access, a field (such as an execution time field) used to store the execution duration required for the current access, a field (such as a core ID field) used to store the core identifier of the first processing unit that is called for the current access, and a field (such as a thread ID field) used to store the thread identifier of the first processing unit that is called for the current access.

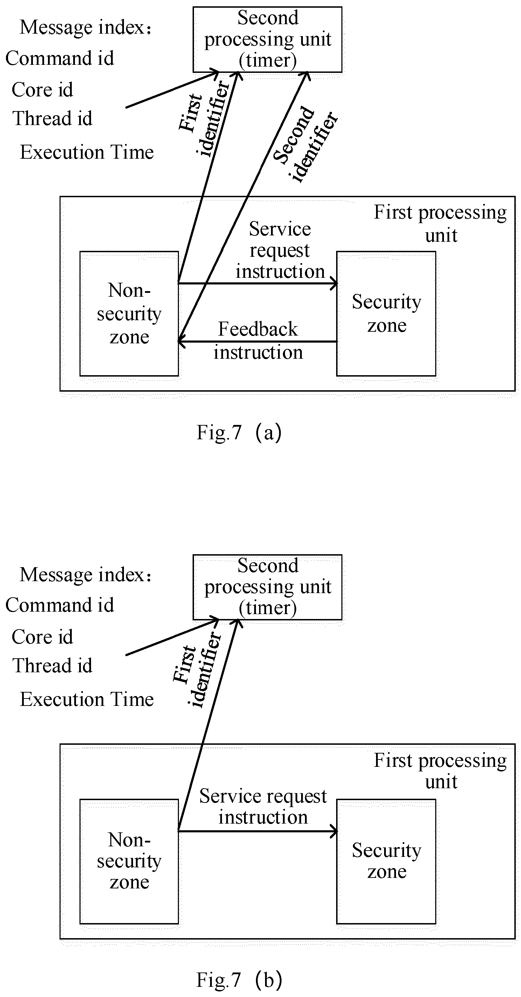

Referring to FIG 7(a), if no fault occurs to the first processing unit during the current access, when the first processing unit accesses the security zone, the non-security zone transmits the service request instruction to the security zone (the instruction can be an SMC instruction). After the current access is completed, the security zone transmits a feedback instruction to the non-security zone.

In FIG 7(a), the access information is displayed in a list that can be referred to as a message index. The list includes a command ID field, an execution time field, a core ID field, and a thread ID field, which are respectively used to store the corresponding access information.

In addition, the access-state identifier in the access information changes with an access state of the first processing unit. In FIG 7(a), if the first processing unit starts the access to the security zone, the access-state identifier stored in the shared memory by the first processing unit is a first identifier. If the first processing unit completes the access to the security zone, the access-state identifier stored in the shared memory by the first processing unit is a second identifier.

In this case, the second processing unit can read the access information from the shared memory periodically based on a preset first period, or can read the access information from the shared memory at a target moment. If the access-state identifier in the shared memory is read as the second identifier when timing duration is less than or equal to the execution duration required for the current access, it is determined that no fault occurs to the first processing unit during the current access.

Referring to FIG 7(b), if a fault occurs to the first processing unit during the current access, when the first processing unit accesses the security zone, the non-security zone transmits the service request instruction to the security zone. However, due to the occurrence of the fault, the current access cannot be completed, and the security zone no longer transmits the feedback instruction to the non-security zone. Correspondingly, the first processing unit does not adjust the first identifier in the shared memory to the second identifier.

In this case, by accessing the shared memory, the second processing unit usually does not read the second identifier after reading the first identifier. Therefore, the second processing unit can determine a service type with a fault in the first processing unit based on the service-type identifier stored in the command ID field, determine the first processing unit with a fault based on the core identifier stored in the core ID field, and determine a thread with a fault based on the thread identifier stored in the thread ID field.

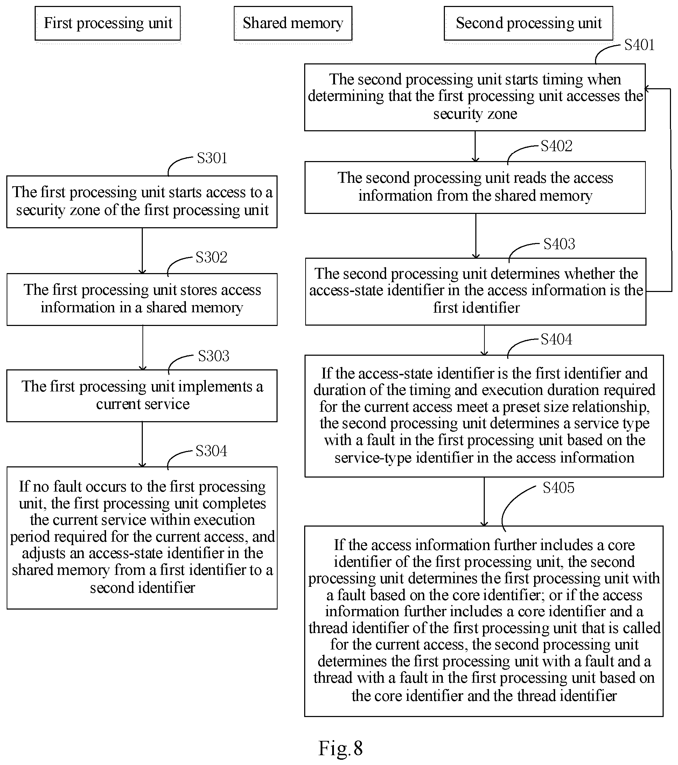

To clarify the chip monitoring method disclosed in this disclosure, another embodiment is disclosed. This embodiment respectively discloses operations performed by the first processing unit and the second processing unit. Referring to FIG 8, in this embodiment of this application, the first processing unit performs the following operations.

Step 301. The first processing unit starts access to a security zone of the first processing unit.

It can be considered that when sending an SMC instruction to the security zone, the first processing unit starts the access to the security zone.

Step 302. The first processing unit stores access information into a shared memory.

In this case, the access-state identifier in the access information is a first identifier.

Step 303. The first processing unit implements a current service.

Step 304. If no fault occurs to the first processing unit, the first processing unit completes the current service within execution duration required for the current access, and it adjusts an access-state identifier in the shared memory from a first identifier to a second identifier after completing the current access.

In addition, the second processing unit can perform the following operations.

Step 401. The second processing unit starts timing when determining that the first processing unit accesses the security zone.

The first processing unit can transmit a trigger instruction to the second processing unit when starting to access the security zone. After receiving the trigger instruction, the second processing unit determines that the first processing unit accesses the security zone, and starts the timing.

Step 402. The second processing unit reads the access information from the shared memory.

Step 403. The second processing unit determines whether the access-state identifier in the access information is the first identifier, and if yes, performs an operation of step 404.

In addition, if the second processing unit determines that the access-state identifier in the access information is not the first identifier (that is, is the second identifier), it indicates that the first processing unit has completed the current access, and step 401 can be returned to, so as to start the timing again when the first processing unit accesses the security zone again.

Step 404. If the access-state identifier is the first identifier and duration of the timing and execution duration required for the current access meet a preset size relationship, the second processing unit determines a service type with a fault in the first processing unit based on a service-type identifier in the access information.

If the access-state identifier is the first identifier and the duration of the timing and the execution duration required for the current access meet the preset size relationship, it indicates that the first processing unit does not complete the current access within the execution duration required for the current access, and a fault occurs to the first processing unit during the current access. Therefore, the service type with a fault in the first processing unit can be determined based on the service-type identifier in the access information.

Step 405. If the access information further includes a core identifier of the first processing unit, the second processing unit determines the first processing unit with a fault based on the core identifier; or if the access information further includes a core identifier and a thread identifier of the first processing unit that is called for the current access, the second processing unit determines the first processing unit with a fault and a thread with a fault in the first processing unit based on the core identifier and a thread identifier.

Whether a fault occurs to the first processing unit can be monitored according to the foregoing steps. If the fault occurs, the service type with a fault in the first processing unit can be determined, and the first processing unit with a fault and the thread with a fault in the first processing unit can be further determined, thereby implementing the chip monitoring.

### Exemplary apparatus

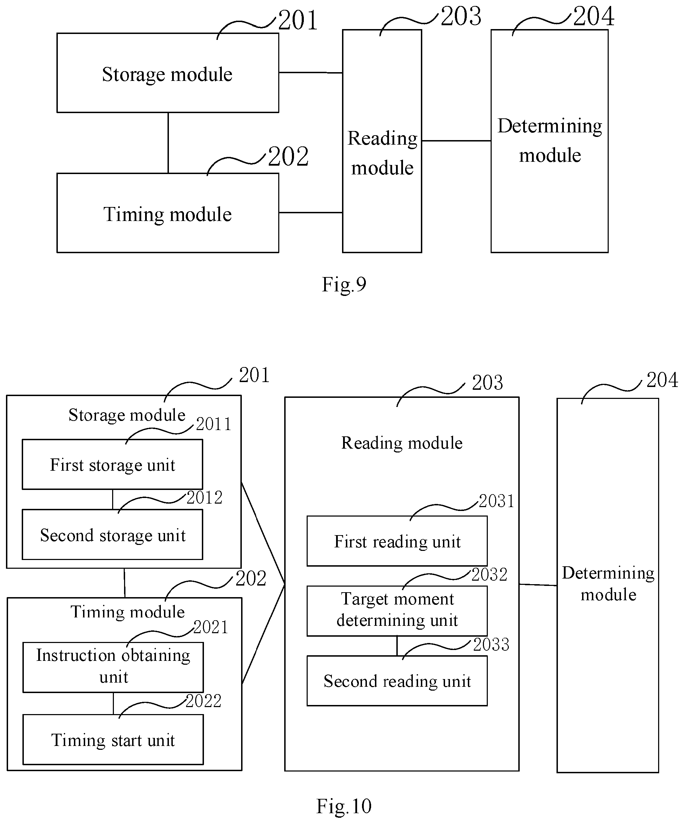

FIG 9 is a diagram of a structure of a chip monitoring apparatus according to an exemplary embodiment of this disclosure. The chip monitoring apparatus can be disposed in an electronic device such as a terminal device or a server, to implement the chip monitoring method according to any one of the foregoing embodiments of this disclosure. A chip is disposed in the electronic device. Moreover, the chip includes chips of a first processing unit and a second processing unit.

As shown in FIG 9, the chip monitoring apparatus includes a storage module 201, a timing module 202, a reading module 203, and a determining module 204.

The storage module 201 is configured to store access information into a shared memory of the first processing unit and the second processing unit when the first processing unit accesses a security zone of the first processing unit. The access information includes an access-state identifier and a service-type identifier of the current access. The access-state identifier is a first identifier or a second identifier. The first identifier indicates that the first processing unit starts the access to the security zone. The second identifier indicates that the first processing unit completes the access to the security zone.

The timing module 202 is configured to start timing when it is determined that the first processing unit accesses the security zone.

The reading module 203 is configured to read the access information stored by the storage module from the shared memory.

The determining module 204 is configured to determine a service type that causes a fault to the first processing unit based on the service-type identifier read by the reading module when it is determined that duration of the timing that is determined by the timing module 202 and execution duration required for the current access meet a preset size relationship and it is determined that the access-state identifier read by the reading module 203 is the first identifier.

In a feasible example, the execution duration required for the current access is execution duration that is determined by the second processing unit based on a preset protocol and the service-type identifier included in the access information. The preset protocol includes a corresponding relationship between at least one service-type identifier and the execution duration.

Alternatively, the execution duration required for the current access is execution duration required for the current access that is included in the access information.

In a feasible example, the access information further includes a core identifier of the first processing unit that is called for the current access, or the access information further includes a core identifier and a thread identifier of the first processing unit that is called for the current access.

Further, when the access information further includes the core identifier of the first processing unit, the determining module 204 is further configured to determine the first processing unit with a fault based on the core identifier after the second processing unit determines a service type with a fault in the first processing unit based on the service-type identifier.

Alternatively, when the access information further includes the core identifier and the thread identifier of the first processing unit, the determining module 204 is further configured to determine the first processing unit with a fault and a thread with a fault after the second processing unit determines the service type with a fault in the first processing unit based on the service-type identifier.

As shown in FIG 10, in a feasible example, the reading module 203 includes a first reading unit 2031. The first reading unit 2031 is configured to read the access information from the shared memory periodically based on a preset first period.

Alternatively, in another feasible example, the reading module 203 includes a target moment determining unit 2032 and a second reading unit 2033.

The target moment determining unit 2032 is configured to determine a target moment at which the second processing unit reads the access information based on the execution duration required for the current access and a moment at which the access information is stored into the shared memory.

The second reading unit 2033 is configured to read the access information from the shared memory at the target moment.

In a feasible example, the storage module 201 includes a first storage unit 2011 and a second storage unit 2012.

The first storage unit 2011 is configured to store the service-type identifier of the current access and the first identifier in the shared memory when the first processing unit starts the current access.

After the first processing unit completes the current access, the second storage unit 2012 is configured to update the first identifier in the shared memory as the second identifier.

In a feasible example, the timing module 202 includes an instruction obtaining unit 2021 and a timing start unit 2022.

The instruction obtaining unit 2021 is configured to obtain a trigger instruction generated by the first processing unit when the first processing unit accesses the security zone.

The timing start unit 2022 is configured to start timing in response to the trigger instruction.

In a feasible design of this disclosure, service types for accessing the security zone by the first processing unit include, but are not limited to any one of the following: key creation, key deletion, key importing, key exporting, symmetric encryption and decryption, hash obtaining, asymmetric encryption and decryption, asymmetric signature, and signature verification.

Whether a fault occurs to the first processing unit can be monitored according to the chip monitoring apparatus provided in this embodiment of this disclosure. If the fault occurs, the service type with a fault in the first processing unit can be determined, and the first processing unit with a fault and the thread with a fault in the first processing unit can be further determined, thereby implementing the chip monitoring.

### Exemplary electronic device

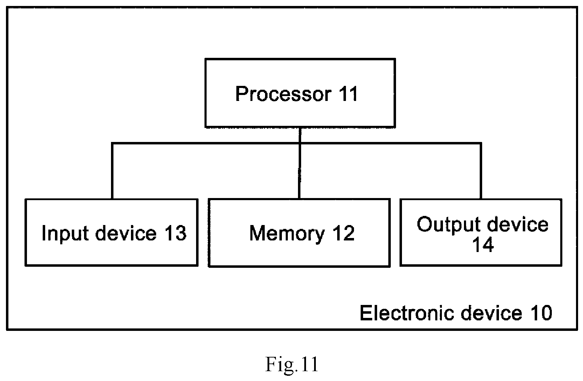

An electronic device according to an embodiment of this disclosure is described below with reference to FIG 11. A chip of the electronic device includes a first processing unit and a second processing unit.

FIG 11 shows a block diagram of an electronic device according to an embodiment of this disclosure. As shown in FIG 11, an electronic device 10 includes one or more processors 11 and a memory 12.

The processor 11 may be a central processing unit (CPU) or another form of processing unit having a data processing capability and/or an instruction execution capability, and can control another component in the electronic device 10 to perform a desired function.

The memory 12 can include one or more computer program products. The computer program product can include various forms of computer readable storage media, such as a volatile memory and/or a non-volatile memory. The volatile memory can include, for example, a random access memory (RAM) and/or a cache. The nonvolatile memory can include, for example, a read-only memory (ROM), a hard disk, and a flash memory. One or more computer program instructions can be stored on the computer readable storage medium. The processor 11 can execute the program instructions to implement the chip monitoring method according to various embodiments of this disclosure that are described above and/or other desired functions. Various contents such as access information can also be stored in the computer readable storage medium.

In an example, the electronic device 10 can further include an input device 13 and an output device 14. These components are connected with each other through a bus system and/or another form of connection mechanism (not shown).

In addition, the input device 13 can further include, for example, a keyboard and a mouse.

The output device 14 can output various information to the outside, including a service type with a fault in the first processing unit that is determined, a core identifier of the first processing unit with a fault, and/or a thread identifier with a fault. The output device 14 can include, for example, a display, a loudspeaker, a printer, a communication network, and a remote output device connected to the communication network.

Certainly, for simplicity, FIG 10 shows only some of components in the electronic device 10 that are related to this disclosure, and components such as a bus and an input/output interface are omitted. In addition, according to specific application situations, the electronic device 10 can further include any other appropriate components.

### Exemplary computer program product and computer readable storage medium

In addition to the foregoing method and device, the embodiments of this disclosure can also relate to a computer program product, which includes computer program instructions. When the computer program instructions are run by a processor, the processor is enabled to perform the steps, of the chip monitoring method according to the embodiments of this disclosure, that are described in the "exemplary method" part of this specification.

The computer program product may be program codes, written with one or any combination of a plurality of programming languages, that is configured to perform the operations in the embodiments of this application. The programming languages include an object-oriented programming language such as Java or C++, and further include a conventional procedural programming language such as a "C" language or a similar programming language. The program codes can be entirely or partially executed on a user computing device, executed as an independent software package, partially executed on the user computing device and partially executed on a remote computing device, or entirely executed on the remote computing device or a server.

In addition, the embodiments of this disclosure can further relate to a computer readable storage medium, which stores computer program instructions. When the computer program instructions are run by the processor, the processor is enabled to perform the steps, of the chip monitoring method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium can include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this application are described above in combination with specific embodiments. However, it should be pointed out that the advantages, superiorities, and effects mentioned in this application are merely examples but are not for limitation, and it cannot be considered that these advantages, superiorities, and effects are necessary for each embodiment of this application. In addition, specific details described above are merely for examples and for ease of understanding, rather than limitations. The details described above do not limit that this application must be implemented by using the foregoing specific details.

The foregoing descriptions are given for illustration and description. In addition, the description is not intended to limit the embodiments of this application to forms disclosed herein. Although a plurality of exemplary aspects and embodiments have been discussed above, a person skilled in the art may recognize certain variations, modifications, changes, additions, and sub-combinations thereof.

## Claims

1. A chip monitoring method, applicable to a chip comprising a first processing unit and a second processing unit, the method comprising:
storing (Step 201), by the first processing unit, access information into a shared memory of the first processing unit and the second processing unit when the first processing unit accesses a security zone of the first processing unit, wherein the access information comprises an access-state identifier and a service-type identifier of the current access, and the access-state identifier is a first identifier indicating that the first processing unit starts the access to the security zone or a second identifier indicating that the first processing unit completes the access to the security zone;
starting (Step 202) timing by the second processing unit when it is determined that the first processing unit accesses the security zone;
reading, (Step 203) by the second processing unit, the access information from the shared memory; and
determining, (Step 204) by the second processing unit, based on the service-type identifier in the access information, a service type with a fault in the first processing unit when the second processing unit determines that duration of the timing and execution duration required for the current access meet a preset size relationship and determines that the access-state identifier in the access information is the first identifier.

2. The method according to claim 1, wherein
the execution duration required for the current access is execution duration that is determined by the second processing unit based on a preset protocol and the service-type identifier comprised in the access information, wherein the preset protocol comprises a corresponding relationship between at least one service-type identifier and the execution duration;
or
the execution duration required for the current access is execution duration required for the current access that is comprised in the access information.

3. The method according to claim 1, wherein
the access information further comprises a core identifier of the first processing unit that is called for the current access, or the access information further comprises a core identifier and a thread identifier of the first processing unit that is called for the current access.

4. The method according to claim 3, wherein after the service type with a fault in the first processing unit is determined by the second processing unit based on the service-type identifier, the method further comprises:
when the access information further comprises the core identifier of the first processing unit, determining (Step 205), by the second processing unit, the first processing unit with a fault based on the core identifier; or
when the access information further comprises the core identifier and the thread identifier of the first processing unit that is called for the current access, determining (Step 206), by the second processing unit, the first processing unit with a fault and a thread with a fault based on the core identifier and the thread identifier.

5. The method according to any one of claims 1 to 4, wherein the reading, by the second processing unit, the access information from the shared memory comprises:
reading, by the second processing unit, the access information from the shared memory periodically based on a preset first period;
or
determining, by the second processing unit, a target moment at which the second processing unit reads the access information based on the execution duration required for the current access and a moment at which the access information is stored into the shared memory; and
reading, by the second processing unit, the access information from the shared memory at the target moment.

6. The method according to any one of claims 1 to 4, wherein the storing access information into a shared memory of the first processing unit and the second processing unit comprises:
when starting the current access, storing (Step 2011), by the first processing unit, the service-type identifier of the current access and the first identifier into the shared memory; and
after completing the current access, updating (Step 2012), by the first processing unit, the first identifier in the shared memory as the second identifier.

7. The method according to any one of claims 1 to 4, wherein the starting timing by the second processing unit when it is determined that the first processing unit accesses the security zone comprises:
obtaining, by the second processing unit, a trigger instruction that is generated by the first processing unit when accessing the security zone; and
in response to the trigger instruction, starting the timing by the second processing unit.

8. The method according to any one of claims 1 to 4, wherein service types for accessing the security zone by the first processing unit comprise any one of the following:
key creation, key deletion, key importing, key exporting, symmetric encryption and decryption, hash obtaining, asymmetric encryption and decryption, asymmetric signature, and signature verification.

9. A chip monitoring apparatus, applicable to a chip comprising a first processing unit and a second processing unit, wherein the chip monitoring apparatus comprises:
a storage module (201), which is configured to store access information into a shared memory of the first processing unit and the second processing unit when the first processing unit accesses a security zone of the first processing unit, wherein the access information comprises an access-state identifier and a service-type identifier of the current access, and the access-state identifier is a first identifier indicating that the first processing unit starts the access to the security zone or a second identifier indicating that the first processing unit completes the access to the security zone;
a timing module (202), which is configured to start timing when it is determined that the first processing unit accesses the security zone;
a reading module (203), which is configured to read the access information stored by the storage module from the shared memory; and
a determining module (204), which is configured to determine a service type that causes a fault to the first processing unit based on the service-type identifier read by the reading module (203), when it is determined that duration of the timing that is determined by the timing module (202) and execution duration required for the current access meet a preset size relationship and it is determined that the access-state identifier read by the reading module (203) is the first identifier.

10. The chip monitoring apparatus according to claim 9, wherein when the access information further includes the core identifier of the first processing unit, the determining module (204) is further configured to determine the first processing unit with a fault based on the core identifier after the second processing unit determines a service type with a fault in the first processing unit based on the service-type identifier;
Or
wherein when the access information further includes the core identifier and the thread identifier of the first processing unit, the determining module (204) is further configured to determine the first processing unit with a fault and a thread with a fault after the second processing unit determines the service type with a fault in the first processing unit based on the service-type identifier.

11. The chip monitoring apparatus according to claim 9, wherein the reading module (203) includes a first reading unit (2031), which is configured to read the access information from the shared memory periodically based on a preset first period;
Or
wherein the reading module (203) includes a target moment determining unit (2032) and a second reading unit (2033), wherein the target moment determining unit (2032) is configured to determine a target moment at which the second processing unit reads the access information based on the execution duration required for the current access and a moment at which the access information is stored into the shared memory; and the second reading unit (2033) is configured to read the access information from the shared memory at the target moment.

12. The chip monitoring apparatus according to claim 9, wherein the storage module (201) includes a first storage unit (2011) and a second storage unit (2012), wherein the first storage unit (2011) is configured to store the service-type identifier of the current access and the first identifier in the shared memory when the first processing unit starts the current access; and after the first processing unit completes the current access, the second storage unit (2012) is configured to update the first identifier in the shared memory as the second identifier.

13. The chip monitoring apparatus according to claim 9, wherein the timing module (202) includes an instruction obtaining unit (2021) and a timing start unit (2022), wherein the instruction obtaining unit (2021) is configured to obtain a trigger instruction generated by the first processing unit when the first processing unit accesses the security zone, and the timing start unit (2022) is configured to start timing in response to the trigger instruction.

14. A computer readable storage medium, wherein the storage medium stores a computer program, and the computer program is used for implementing the chip monitoring method according to any one of claims 1 to 8.

15. An electronic device (10), wherein the electronic device comprises:
a processor (11); and
a memory (12), configured to store processor-executable instructions,
wherein the processor is configured to read the executable instructions from the memory, and execute the instructions to implement the chip monitoring method according to any one of claims 1 to 8.

## Patentansprüche

1. Ein Chip-Überwachungsverfahren, das auf einen Chip anwendbar ist, der eine erste Verarbeitungseinheit und eine zweite Verarbeitungseinheit umfasst, wobei das Verfahren umfasst:
Speichern (Schritt 201) von Zugriffsinformationen in einen gemeinsamen Speicher der ersten Verarbeitungseinheit und der zweiten Verarbeitungseinheit durch die erste Verarbeitungseinheit, wenn die erste Verarbeitungseinheit auf eine Sicherheitszone der ersten Verarbeitungseinheit zugreift, wobei die Zugriffsinformationen einen Zugriffsstatus-Identifikator und einen Diensttyp-Identifikator des aktuellen Zugriffs umfassen und der Zugriffsstatus-Identifikator ein erster Identifikator ist, der anzeigt, dass die erste Verarbeitungseinheit den Zugriff auf die Sicherheitszone beginnt, oder ein zweiter Identifikator, der anzeigt, dass die erste Verarbeitungseinheit den Zugriff auf die Sicherheitszone beendet;
Starten (Schritt 202) der Zeitmessung durch die zweite Verarbeitungseinheit, wenn festgestellt wird, dass die erste Verarbeitungseinheit auf die Sicherheitszone zugreift;
Lesen (Schritt 203) der Zugriffsinformationen aus dem gemeinsamen Speicher durch die zweite Verarbeitungseinheit; und
Bestimmen (Schritt 204) eines Diensttyps mit einem Fehler in der ersten Verarbeitungseinheit durch die zweite Verarbeitungseinheit auf der Grundlage des Diensttyp-Identifizierers in den Zugriffsinformationen, wenn die zweite Verarbeitungseinheit feststellt, dass die Dauer des Zeitablaufs und die Ausführungsdauer, die für den aktuellen Zugriff erforderlich sind, eine vorgegebene Größenbeziehung erfüllen, und feststellt, dass der Zugriffszustand-Identifizierer in den Zugriffsinformationen der erste Identifizierer ist.

2. Verfahren nach Anspruch 1, wobei
die für den aktuellen Zugriff erforderliche Ausführungsdauer eine Ausführungsdauer ist, die von der zweiten Verarbeitungseinheit auf der Grundlage eines voreingestellten Protokolls und des in den Zugriffsinformationen enthaltenen Diensttyp-Identifikators bestimmt wird, wobei das voreingestellte Protokoll eine entsprechende Beziehung zwischen mindestens einem Diensttyp-Identifikator und der Ausführungsdauer umfasst;
oder
die für den aktuellen Zugriff erforderliche Ausführungsdauer ist die für den aktuellen Zugriff erforderliche Ausführungsdauer, die in den Zugriffsinformationen enthalten ist.

3. Verfahren nach Anspruch 1, wobei
die Zugriffsinformationen ferner eine Kernkennung der ersten Verarbeitungseinheit umfassen, die für den aktuellen Zugriff aufgerufen wird, oder die Zugriffsinformationen ferner eine Kernkennung und eine Thread-Kennung der ersten Verarbeitungseinheit umfassen, die für den aktuellen Zugriff aufgerufen wird.

4. Verfahren nach Anspruch 3, wobei nach der Bestimmung des Diensttyps mit einem Fehler in der ersten Verarbeitungseinheit durch die zweite Verarbeitungseinheit auf der Grundlage des Diensttyp-Identifizierers das Verfahren ferner umfasst:
wenn die Zugriffsinformationen ferner die Kernkennung der ersten Verarbeitungseinheit umfassen, Bestimmen (Schritt 205) der ersten Verarbeitungseinheit mit einem Fehler auf der Grundlage der Kernkennung durch die zweite Verarbeitungseinheit; oder
wenn die Zugriffsinformationen ferner die Kernkennung und die Thread-Kennung der ersten Verarbeitungseinheit umfassen, die für den aktuellen Zugriff aufgerufen wird, Bestimmen (Schritt 206) der ersten Verarbeitungseinheit mit einem Fehler und eines Threads mit einem Fehler durch die zweite Verarbeitungseinheit auf der Grundlage der Kernkennung und der Thread-Kennung.

5. Verfahren nach einem der Ansprüche 1 bis 4, wobei das Lesen der Zugriffsinformationen aus dem gemeinsamen Speicher durch die zweite Verarbeitungseinheit umfasst:
Lesen der Zugriffsinformationen aus dem gemeinsamen Speicher durch die zweite Verarbeitungseinheit in regelmäßigen Abständen auf der Grundlage einer voreingestellten ersten Periode;
oder
Bestimmen, durch die zweite Verarbeitungseinheit, eines Zielzeitpunkts, zu dem die zweite Verarbeitungseinheit die Zugriffsinformation liest, basierend auf der Ausführungsdauer, die für den aktuellen Zugriff erforderlich ist, und einem Zeitpunkt, zu dem die Zugriffsinformation in dem gemeinsamen Speicher gespeichert ist; und
Lesen der Zugriffsinformationen aus dem gemeinsamen Speicher zum Zielzeitpunkt durch die zweite Verarbeitungseinheit.

6. Verfahren nach einem der Ansprüche 1 bis 4, wobei das Speichern von Zugriffsinformationen in einem gemeinsamen Speicher der ersten Verarbeitungseinheit und der zweiten Verarbeitungseinheit umfasst:
beim Starten des aktuellen Zugriffs, Speichern (Schritt 2011) des Diensttyp-Identifikators des aktuellen Zugriffs und des ersten Identifikators in den gemeinsamen Speicher durch die erste Verarbeitungseinheit; und
nach Beendigung des aktuellen Zugriffs Aktualisierung (Schritt 2012) der ersten Kennung im gemeinsamen Speicher als zweite Kennung durch die erste Verarbeitungseinheit.

7. Verfahren nach einem der Ansprüche 1 bis 4, wobei die Startzeit durch die zweite Verarbeitungseinheit, wenn festgestellt wird, dass die erste Verarbeitungseinheit auf die Sicherheitszone zugreift, Folgendes umfasst:
Erhalten eines Auslösebefehls durch die zweite Verarbeitungseinheit, der von der ersten Verarbeitungseinheit beim Zugriff auf die Sicherheitszone erzeugt wird; und
als Reaktion auf den Auslösebefehl, Starten der Zeitmessung durch die zweite Verarbeitungseinheit.

8. Verfahren nach einem der Ansprüche 1 bis 4, wobei die Diensttypen für den Zugriff auf die Sicherheitszone durch die erste Verarbeitungseinheit einen der folgenden umfassen:
Schlüsselerstellung, Schlüssellöschung, Schlüsselimport, Schlüsselexport, symmetrische Ver- und Entschlüsselung, Hash-Ermittlung, asymmetrische Ver- und Entschlüsselung, asymmetrische Signatur und Signaturprüfung.

9. Eine Chip-Überwachungsvorrichtung, die auf einen Chip anwendbar ist, der eine erste Verarbeitungseinheit und eine zweite Verarbeitungseinheit umfasst, wobei die Chip-Überwachungsvorrichtung umfasst:
ein Speichermodul (201), das so konfiguriert ist, dass es Zugriffsinformationen in einem gemeinsamen Speicher der ersten Verarbeitungseinheit und der zweiten Verarbeitungseinheit speichert, wenn die erste Verarbeitungseinheit auf eine Sicherheitszone der ersten Verarbeitungseinheit zugreift, wobei die Zugriffsinformationen eine Zugriffszustandskennung und eine Dienstartkennung des aktuellen Zugriffs umfassen und die Zugriffszustandskennung eine erste Kennung ist, die anzeigt, dass die erste Verarbeitungseinheit den Zugriff auf die Sicherheitszone beginnt, oder eine zweite Kennung, die anzeigt, dass die erste Verarbeitungseinheit den Zugriff auf die Sicherheitszone beendet;
ein Zeitmessmodul (202), das so konfiguriert ist, dass es mit der Zeitmessung beginnt, wenn festgestellt wird, dass die erste Verarbeitungseinheit auf die Sicherheitszone zugreift;
ein Lesemodul (203), das so konfiguriert ist, dass es die von dem Speichermodul gespeicherten Zugriffsinformationen aus dem gemeinsamen Speicher liest; und
ein Bestimmungsmodul (204), das so konfiguriert ist, dass es auf der Grundlage des vom Lesemodul (203) gelesenen Diensttyp-Identifizierers einen Diensttyp bestimmt, der einen Fehler in der ersten Verarbeitungseinheit verursacht, wenn festgestellt wird, dass die Dauer der Zeitsteuerung, die vom Zeitsteuerungsmodul (202) bestimmt wird, und die für den aktuellen Zugriff erforderliche Ausführungsdauer eine voreingestellte Größenbeziehung erfüllen, und wenn festgestellt wird, dass der vom Lesemodul (203) gelesene Zugriffsstatus-Identifizierer der erste Identifizierer ist.

10. Chipüberwachungsvorrichtung nach Anspruch 9, wobei, wenn die Zugriffsinformationen ferner die Kernkennung der ersten Verarbeitungseinheit enthalten, das Bestimmungsmodul (204) ferner so konfiguriert ist, dass es die erste Verarbeitungseinheit mit einem Fehler auf der Grundlage der Kernkennung bestimmt, nachdem die zweite Verarbeitungseinheit einen Diensttyp mit einem Fehler in der ersten Verarbeitungseinheit auf der Grundlage der Diensttypkennung bestimmt;
Oder
wobei das Bestimmungsmodul (204), wenn die Zugriffsinformationen ferner die Kernkennung und die Thread-Kennung der ersten Verarbeitungseinheit enthalten, ferner so konfiguriert ist, dass es die erste Verarbeitungseinheit mit einem Fehler und einen Thread mit einem Fehler bestimmt, nachdem die zweite Verarbeitungseinheit den Diensttyp mit einem Fehler in der ersten Verarbeitungseinheit auf der Grundlage der Diensttyp-Kennung bestimmt.

11. Chipüberwachungsgerät nach Anspruch 9, wobei das Lesemodul (203) eine erste Leseeinheit (2031) enthält, die so konfiguriert ist, dass sie die Zugriffsinformationen aus dem gemeinsamen Speicher periodisch auf der Grundlage einer voreingestellten ersten Periode liest;
Oder
wobei das Lesemodul (203) eine Zielmoment-Bestimmungseinheit (2032) und eine zweite Leseeinheit (2033) enthält, wobei die Zielmoment-Bestimmungseinheit (2032) konfiguriert ist, um einen Zielmoment zu bestimmen, zu dem die zweite Verarbeitungseinheit die Zugriffsinformationen liest, basierend auf der Ausführungsdauer, die für den aktuellen Zugriff erforderlich ist, und einem Moment, zu dem die Zugriffsinformationen in dem gemeinsamen Speicher gespeichert sind; und die zweite Leseeinheit (2033) konfiguriert ist, um die Zugriffsinformationen zu dem Zielmoment aus dem gemeinsamen Speicher zu lesen.

12. Chipüberwachungsvorrichtung nach Anspruch 9, wobei das Speichermodul (201) eine erste Speichereinheit (2011) und eine zweite Speichereinheit (2012) enthält, wobei die erste Speichereinheit (2011) so konfiguriert ist, dass sie den Diensttyp-Identifikator des aktuellen Zugriffs und den ersten Identifikator in dem gemeinsamen Speicher speichert, wenn die erste Verarbeitungseinheit den aktuellen Zugriff beginnt; und nachdem die erste Verarbeitungseinheit den aktuellen Zugriff abgeschlossen hat, ist die zweite Speichereinheit (2012) so konfiguriert, dass sie den ersten Identifikator in dem gemeinsamen Speicher als den zweiten Identifikator aktualisiert.

13. Chipüberwachungsvorrichtung nach Anspruch 9, wobei das Zeitsteuerungsmodul (202) eine Befehlserfassungseinheit (2021) und eine Zeitsteuerungsstarteinheit (2022) enthält, wobei die Befehlserfassungseinheit (2021) so konfiguriert ist, dass sie einen von der ersten Verarbeitungseinheit erzeugten Auslösebefehl erhält, wenn die erste Verarbeitungseinheit auf die Sicherheitszone zugreift, und die Zeitsteuerungsstarteinheit (2022) so konfiguriert ist, dass sie die Zeitsteuerung in Reaktion auf den Auslösebefehl startet.

14. Computerlesbares Speichermedium, wobei das Speichermedium ein Computerprogramm speichert und das Computerprogramm zur Implementierung des Chipüberwachungsverfahrens nach einem der Ansprüche 1 bis 8 verwendet wird.

15. Eine elektronische Vorrichtung (10), wobei die elektronische Vorrichtung umfasst:
einen Prozessor (11); und
einen Speicher (12), der so konfiguriert ist, dass er prozessorausführbare Anweisungen speichert,
wobei der Prozessor so konfiguriert ist, dass er die ausführbaren Anweisungen aus dem Speicher liest und die Anweisungen ausführt, um das Chipüberwachungsverfahren nach einem der Ansprüche 1 bis 8 zu implementieren.

## Revendications

1. Procédé de surveillance de puce applicable à une puce comprenant une première unité de traitement et une seconde unité de traitement, ledit procédé comprenant :
le stockage (étape 201) d'informations d'accès dans une mémoire commune de la première unité de traitement et de la deuxième unité de traitement par la première unité de traitement lorsque la première unité de traitement accède à une zone de sécurité de la première unité de traitement, dans lequel les informations d'accès comprennent un identifiant d'état d'accès et un identifiant de type de service de l'accès actuel, et l'identifiant d'état d'accès est un premier identifiant indiquant que la première unité de traitement commence à accéder à la zone de sécurité ou un second identifiant indiquant que la première unité de traitement termine l'accès à la zone de sécurité ;
le lancement (étape 202) du chronométrage par la deuxième unité de traitement lorsqu'il est déterminé que la première unité de traitement accède à la zone de sécurité ;
la lecture (étape 203) des informations d'accès à partir de la mémoire partagée par la deuxième unité de traitement ; et
la détermination (étape 204) par la seconde unité de traitement d'un type de service ayant une erreur dans la première unité de traitement sur la base de l'identificateur de type de service dans les informations d'accès, lorsque la seconde unité de traitement détermine que la durée du délai et la durée d'exécution nécessaires pour l'accès en cours satisfont à une relation de taille prédéterminée, et détermine que l'identificateur d'état d'accès dans les informations d'accès est le premier identificateur.

2. Procédé selon la revendication 1, dans lequel
la durée d'exécution requise pour l'accès actuel est une durée d'exécution déterminée par la seconde unité de traitement sur la base d'un protocole prédéfini et de l'identificateur de type de service inclus dans les informations d'accès, le protocole prédéfini comprenant une relation correspondante entre au moins un identificateur de type de service et la durée d'exécution ;
ou
la durée d'exécution requise pour l'accès actuel est la durée d'exécution requise pour l'accès actuel et contenue dans les informations d'accès.

3. Procédé selon la revendication 1, dans lequel
les informations d'accès comprennent en outre un identifiant de noyau de la première unité de traitement appelée pour l'accès en cours, ou les informations d'accès comprennent en outre un identifiant de noyau et un identifiant de fil d'exécution de la première unité de traitement appelée pour l'accès en cours.

4. Procédé selon la revendication 3, dans lequel, après la détermination du type de service avec une erreur dans la première unité de traitement par la deuxième unité de traitement sur la base de l'identificateur de type de service, le procédé comprend en outre :
si les informations d'accès comprennent en outre l'identifiant de noyau de la première unité de traitement, la détermination (étape 205) de la première unité de traitement avec une erreur basée sur l'identifiant de noyau par la seconde unité de traitement ; ou
si les informations d'accès comprennent en outre l'identifiant de noyau et l'identifiant de thread de la première unité de traitement appelée pour l'accès en cours, la détermination (étape 206) par la seconde unité de traitement de la première unité de traitement ayant une erreur et d'un thread ayant une erreur sur la base de l'identifiant de noyau et de l'identifiant de thread.

5. Procédé selon l'une quelconque des revendications 1 à 4, dans lequel la lecture des informations d'accès à partir de la mémoire partagée par la deuxième unité de traitement comprend :
la lecture des informations d'accès à partir de la mémoire partagée par la deuxième unité de traitement à intervalles réguliers sur la base d'une première période prédéfinie ;
ou
la détermination, par la seconde unité de traitement, d'un instant cible auquel la seconde unité de traitement lit les informations d'accès, sur la base de la durée d'exécution requise pour l'accès en cours et d'un instant auquel les informations d'accès sont stockées dans la mémoire partagée ; et
lecture par la deuxième unité de traitement des informations d'accès à partir de la mémoire partagée au moment cible.

6. Procédé selon l'une quelconque des revendications 1 à 4, dans lequel le stockage d'informations d'accès dans une mémoire commune de la première unité de traitement et de la deuxième unité de traitement comprend :
au démarrage de l'accès en cours, le stockage (étape 2011) par la première unité de traitement de l'identifiant de type de service de l'accès en cours et du premier identifiant dans la mémoire commune ; et
à la fin de l'accès en cours, mise à jour (étape 2012) du premier identifiant dans la mémoire partagée en tant que deuxième identifiant par la première unité de traitement.

7. Procédé selon l'une quelconque des revendications 1 à 4, dans lequel le temps de démarrage par la deuxième unité de traitement, lorsqu'il est déterminé que la première unité de traitement accède à la zone de sécurité, comprend ce qui suit :
la réception, par la deuxième unité de traitement, d'une commande de déclenchement générée par la première unité de traitement lors de l'accès à la zone de sécurité ; et
en réponse à l'ordre de déclenchement, lancement du chronométrage par la deuxième unité de traitement.

8. Procédé selon l'une quelconque des revendications 1 à 4, dans lequel les types de service pour l'accès à la zone de sécurité par la première unité de traitement comprennent l'un des suivants :
Création de clés, suppression de clés, importation de clés, exportation de clés, cryptage et décryptage symétriques, détermination de hachage, cryptage et décryptage asymétriques, signature asymétrique et vérification de signature.

9. Dispositif de surveillance de puce applicable à une puce comprenant une première unité de traitement et une seconde unité de traitement, dans lequel le dispositif de surveillance de puce comprend :
un module de mémoire (201) configuré pour stocker des informations d'accès dans une mémoire commune de la première unité de traitement et de la seconde unité de traitement lorsque la première unité de traitement accède à une zone de sécurité de la première unité de traitement, les informations d'accès comprenant un identifiant d'état d'accès et un identifiant de type de service de l'accès en cours, l'identifiant d'état d'accès étant un premier identifiant indiquant que la première unité de traitement commence l'accès à la zone de sécurité ou un second identifiant indiquant que la première unité de traitement termine l'accès à la zone de sécurité ;
un module de chronométrage (202) configuré pour commencer à chronométrer lorsqu'il est déterminé que la première unité de traitement accède à la zone de sécurité ;
un module de lecture (203) configuré pour lire les informations d'accès stockées par le module de mémoire à partir de la mémoire partagée ; et
un module de détermination (204) configuré pour déterminer, sur la base de l'identificateur de type de service lu par le module de lecture (203), un type de service qui provoque une erreur dans la première unité de traitement lorsqu'il est déterminé que la durée de la temporisation déterminée par le module de temporisation (202) et la durée d'exécution requise pour l'accès actuel satisfont à une relation de taille prédéfinie, et lorsqu'il est déterminé que l'identificateur d'état d'accès lu par le module de lecture (203) est le premier identificateur.

10. Dispositif de surveillance de puce selon la revendication 9, dans lequel, lorsque les informations d'accès comprennent en outre l'identifiant de noyau de la première unité de traitement, le module de détermination (204) est en outre configuré pour déterminer la première unité de traitement avec une erreur sur la base de l'identifiant de noyau après que la seconde unité de traitement a déterminé un type de service avec une erreur dans la première unité de traitement sur la base de l'identifiant de type de service ;
Ou
dans lequel, lorsque les informations d'accès comprennent en outre l'identifiant de noyau et l'identifiant de thread de la première unité de traitement, le module de détermination (204) est en outre configuré pour déterminer la première unité de traitement avec une erreur et un thread avec une erreur après que la seconde unité de traitement a déterminé le type de service avec une erreur dans la première unité de traitement sur la base de l'identifiant de type de service.

11. Dispositif de surveillance de puce selon la revendication 9, dans lequel le module de lecture (203) comprend une première unité de lecture (2031) configurée pour lire périodiquement les informations d'accès à partir de la mémoire commune sur la base d'une première période prédéfinie ;
Ou
dans lequel le module de lecture (203) comprend une unité de détermination d'instant cible (2032) et une seconde unité de lecture (2033), l'unité de détermination d'instant cible (2032) étant configurée pour déterminer un instant cible auquel la seconde unité de traitement lit les informations d'accès, sur la base de la durée d'exécution requise pour l'accès en cours et d'un instant auquel les informations d'accès sont stockées dans la mémoire partagée ; et la seconde unité de lecture (2033) étant configurée pour lire les informations d'accès à l'instant cible dans la mémoire partagée.

12. Dispositif de surveillance de puce selon la revendication 9, dans lequel le module de mémoire (201) comprend une première unité de mémoire (2011) et une seconde unité de mémoire (2012), dans lequel la première unité de mémoire (2011) est configurée pour stocker l'identificateur de type de service de l'accès en cours et le premier identificateur dans la mémoire partagée lorsque la première unité de traitement commence l'accès en cours ; et après que la première unité de traitement a terminé l'accès en cours, la seconde unité de mémoire (2012) est configurée pour mettre à jour le premier identificateur dans la mémoire partagée comme le second identificateur.

13. Dispositif de surveillance de puce selon la revendication 9, dans lequel le module de temporisation (202) comprend une unité d'acquisition de commande (2021) et une unité de démarrage de temporisation (2022), l'unité d'acquisition de commande (2021) étant configurée pour recevoir une commande de déclenchement générée par la première unité de traitement lorsque la première unité de traitement accède à la zone de sécurité, et l'unité de démarrage de temporisation (2022) étant configurée pour démarrer la temporisation en réponse à la commande de déclenchement.

14. Support de stockage lisible par ordinateur, dans lequel le support de stockage stocke un programme informatique et le programme informatique est utilisé pour mettre en œuvre le procédé de surveillance de puce selon l'une quelconque des revendications 1 à 8.

15. Dispositif électronique (10), le dispositif électronique comprenant :
un processeur (11) ; et
une mémoire (12) configurée pour stocker des instructions exécutables par le processeur,
dans lequel le processeur est configuré pour lire les instructions exécutables dans la mémoire et pour exécuter les instructions afin de mettre en œuvre le procédé de surveillance de puce selon l'une quelconque des revendications 1 à 8.
